# EUROPEAN PATENT APPLICATION

(11) **EP 4 795 981 A1**
(43) Date of publication of application: **26.08.2026**
(21) Application number: 25199959.5
(22) Date of filing: 03.09.2025
(51) Int. Cl.: A47G 27/02, D01D 5/253, D02G 3/44, D06N 7/00, E01C 13/08

(54) **SHOCK ABSORBING LAYER AND A METHOD FOR ITS PRODUCTION**

(30) Priority: 03.09.2024 BE 202405589; 09.04.2025 CN 202510440161
(71) Applicant: TenCate Grass Holding BV, 7443 RE Nijverdal (NL)
(72) Inventor: Penninck, John, 9100 Sint-Niklaas (BE)
(74) Representative: Brantsandpatents bv

(57) **Abstract**

The present invention relates to a shock-absorbing layer comprising a backing cloth with a top surface, a bottom surface, and a plurality of loops of fibers consisting of one or more elastic polymers, characterized in that the loops have a cross-section which comprises at least two free ends, and wherein the cross-section between said two ends consists of an elongated segment, wherein the elongated segment extends along a longitudinal axis, wherein the longitudinal axis comprises a first tangent vector at a first point and a second tangent vector at a second point, which first and second tangent vectors define a mutual angle between 20° and 160°, preferably between 30° and 150°.

## Description

### TECHNICAL FIELD

In a first aspect, the invention relates to a shock-absorbing layer.

In a second aspect, the invention relates to a method for manufacturing a shock-absorbing layer.

### PRIOR ART

In general, shock-absorbing layers have an important function in situations involving impact or vibration. Among other things, shock-absorbing layers have an important role in reducing the risk of injuries in athletes. When athletes play on a hard surface, the impact of their movements can be damaging to their muscles, joints and bones, and can significantly increase the risk of injury.

In the context of sports, the use of a shock-absorbing layer in an artificial turf installation is a well-known example. The shock-absorbing layer in an artificial turf installation is often a layer of cushioning material that is installed under artificial turf to provide additional shock absorption and cushioning. This layer of material is usually made of foam, rubber, or other synthetic materials, and is designed to help prevent injuries that may occur from falls or impacts on the artificial turf field. A stabilizing layer is placed on top of this shock-absorbing layer, followed by a layer of artificial turf with a cut pile. The tufting of artificial turf is a well-known and frequently used technique in the production of artificial turf fields. With this technique, the artificial turf is interwoven with a textile backing. There are several methods of tufting, including the so-called cut-pile process. With this technique, the fibers are cut, resulting in a smooth surface that provides a soft, comfortable surface.

Although artificial turf installations with known shock-absorbing layers already offer advantages over natural grass fields, the overall shock absorption and energy restitution properties still have room for improvement. Moreover, known shock-absorbing layers have disadvantages due to a limited ability to drain liquids, such as water, from the artificial turf installation.

Accordingly, there is a need for an improved shock-absorbing layer that can be applied on a large scale in various devices, with improved shock absorption properties.

One of the biggest challenges in this regard is finding an optimal ratio between high bending stiffness and minimal material usage. Typically, more "mass" results in a higher bending stiffness, but this leads to a more expensive and heavier product, which is undesirable.

The present invention aims to resolve at least some of the problems and disadvantages mentioned above.

### SUMMARY OF THE INVENTION

In a first aspect, the invention relates to a shock-absorbing layer according to claim 1. Preferred embodiments of the first aspect of the invention are described in claims 2 to 15.

The invention relates to a shock-absorbing layer consisting of a backing cloth with a top surface, a bottom surface and a large number of loops substantially consisting of at least one elastic polymer.

The cross-section of the loops comprises a hollow closed structure and/or at least two free ends, wherein the cross-section between said two ends consists of an elongated segment, and wherein the elongated segment extends along a longitudinal axis, wherein the longitudinal axis comprises a first tangent vector at a first point and a second tangent vector at a second point, which first and second tangent vectors define an angle relative to each other of between 20° and 160°, preferably between 30° and 150°.

The loops may be attached to the ground cloth according to a loop-pile principle. The shock-absorbing layer can be used as an intermediate layer between a hard surface and a top layer of, for example, sports mats to absorb shocks and impacts and prevent injuries. It is particularly suitable for sports such as gymnastics and judo, where athletes often make hard landings. It can also be integrated into artificial turf installations for added cushioning and injury protection. In addition, it is ideal for use as an underlay for playgrounds and other recreational areas where fall protection is essential.

The loop-pile structure offers various advantages, including that its fibers are more durable and less prone to wear because the loops are not cut. The loops are also capable of rebounding after being compressed, providing better shock absorption. Moreover, the loop structure ensures better drainage and ventilation, which can improve the lifespan of the shock-absorbing layer and prevent water accumulation, which can cause slipperiness.

The elastic polymer fibers provide more elasticity and resilience, which leads to better shock absorption and energy return. A resilient polymer, such as a thermoplastic polymer, is preferred for this purpose. Resilient polymers have the ability to return to their original shape or position after compression.

This shock-absorbing layer also has the surprising advantage that the shock-absorbing layer is fully recyclable. In particular because both the backing cloth and the coating of the shock-absorbing layer are substantially manufactured from polyethylene and/or polypropylene.

### DESCRIPTION OF THE FIGURES

**Fig.** 1 illustrates a schematic representation of a method according to preferred embodiments of the invention for manufacturing a shock-absorbing layer for an artificial turf installation, a shock-absorbing layer being shown as a cross-section.
**FIG.** 2 illustrates a possible (cross-)section of the loops or fibers, perpendicular to the longitudinal direction.

### DETAILED DESCRIPTION

The invention relates to a shock-absorbing layer, preferably for an artificial turf installation.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

The term "polymer" refers to a compound consisting of at least two or more monomers. The term "recyclable" refers to materials that can be converted into another material or product for a different or similar use or the extraction of at least one of the individual components or materials of the product for use of that component or material in another product. If the term "fully recyclable" is used, the material or system, in this document, should be understood as a material or system in which all different components can be converted into another material or product for a different or similar use. To be fully recyclable, at least 90% of the carbon present in the product to be recycled must end up in the recycled product, preferably 95% and more preferably 99%. Reuse means that an object is used again, whether or not for a different purpose. In recycling, a waste material is transformed into a new product.

The term "radius of curvature" refers to the radius of the circle that best approximates the curvature of a curve at a specific point. It is a measure of how sharply the curve is bent at that point. In the context of the invention, the curve is the outline of the cross-section of the loops.

In this document, the articles "a", "an" and "the" may denote both the singular and the plural, unless the context requires otherwise. For example, "a segment" means one or more segments.

When "about" or "around" is used in this document with reference to a measurable quantity, a parameter, a time period or moment, or the like, it is intended to refer to variations of +/-20% or less, preferably +/-10% or less, more preferably +/-5% or less, even more preferably +/-1% or less, and even more preferably +/-0.1% or less of the quoted value, insofar as such variations are applicable to the disclosed invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a shock-absorbing layer comprising a backing cloth having a top surface, a bottom surface, and a plurality of loops.

In particular, the loops are formed from fibers substantially manufactured from at least one elastic polymer. The cross-section of the loops comprises a hollow, closed structure and/or has at least two free ends, wherein the cross-section between said two ends consists of an elongated segment, and wherein the elongated segment extends along a longitudinal axis, wherein the longitudinal axis comprises a first tangent vector at a first point and a second tangent vector at a second point, which first and second tangent vectors define an angle relative to each other of between 20° and 160°, preferably between 30° and 150°.

In this way, the invention provides a solution for optimizing the bending stiffness relative to the material used. In the prior art, the bending stiffness was always improved by making the loops thicker, longer and/or wider, which, however, greatly increases the amount of material used. In the invention, the bending stiffness is inventively increased by optimizing the cross-section of the fiber, which extends in two dimensions, and in this way is effectively braced against bending, without the material usage being excessively high.

Because (at least) one segment extends in two mutually different directions, they reinforce each other in terms of bending stiffness. This technique is applied in the construction industry, where profiles are typically reinforced with perpendicular sections, such as an I-beam. In the context of fibers, which are typically manufactured via extrusion or other techniques, the cross-section can also be varied, as discussed further below. Hollow constructions are considered, including an O-shape, or a hollow polygon such as a triangle, quadrilateral, square, etc., as well as other shapes, as discussed further below.

Initially, the layer is intended for use as a shock-absorbing layer for artificial turf installations to provide extra cushioning and protection against injuries. This not only makes artificial turf fields safer, but also more durable and resistant to wear and tear. The shock-absorbing layer is also ideal for use as an underlay for playgrounds and other recreational areas where fall protection is important.

However, the shock-absorbing layer is a versatile layer that can be applied in various ways. It can preferably be used as an intermediate layer between a hard surface and a top layer of sports mats to absorb shocks and impacts and thus prevent injuries. The shock-absorbing layer is therefore ideal as a mat or underlay for a mat for sports such as gymnastics and judo, where athletes often have to make hard landings. This layer helps to absorb the impact of landings, providing a safer and more comfortable training environment.

The shock-absorbing layer can also be used as a mattress, providing good support and better pressure distribution while sleeping. It can help to reduce pressure points on the body and improve the sleeping experience.

To guarantee improved shock absorption compared to existing techniques, the loops are formed with a cross-section according to claim 1. This cross-section increases the bending stiffness of each loop, thereby improving the shock-absorbing effect of the entire layer, without requiring additional measures such as providing a coating layer that would increase the bending stiffness. A cross-section comprising a segment that has two longitudinal axes which form an angle of 20 to 160 degrees will, in the event of deformation, better absorb forces because material is concentrated along the longitudinal axes, which support each other at said angle. This results in a stiffer loop, which increases the resilience of the shock-absorbing layer.

According to a preferred embodiment, the elongated segment has, along the longitudinal axis, a dimension perpendicular to the longitudinal axis which is at least 10%, and preferably at least 25%, and more preferably at least 35%, and still more preferably at least 50% of the dimension along the longitudinal direction. With these dimensions, the elongated segment maintains a length along the longitudinal direction that is sufficient to effectively absorb forces, as described above, without an overly small dimension in the perpendicular direction making the loop vulnerable to plastic deformation in said longitudinal direction and undermining this advantageous effect.

According to a preferred embodiment, the cross-section of the loops comprises one or more elongated segments which form an angle of between 20° and 160°, preferably between 30° and 150°, and/or wherein the tangent to the one or more elongated segments at the first point is substantially perpendicular to the tangent to the one or more elongated segments at the second point. When the cross-section of the loops comprises multiple angles, the above-described effect will be enhanced. This further increases the bending stiffness of the loops and, consequently, the shock-absorbing effect of the overall shock-absorbing layer.

According to a preferred embodiment, the cross-section of the loops has or comprises one or more of the following shapes: C, E, F, H, J, K, L, M, N, O, S, T, V, W, X, Y, Z. These shapes comprise multiple longitudinal axes which form an angle of between 20 and 160 degrees, whereby the positive effect described above is obtained. It will be apparent that further shapes are also provided for, and in particular shapes that comprise one or more of the above-mentioned shapes.

According to a preferred embodiment, the loops do not comprise a coating. Current techniques often use a coating to increase the stiffness of the shock-absorbing layer. However, coatings have a detrimental effect on the lifespan because they increase the fragility of the loops. In addition, the application of coatings also has a detrimental effect on the environment. In the production of coatings, chemical substances and energy-intensive processes are often used, which can lead to greenhouse gas emissions, pollution, and the use of non-sustainable raw materials. Furthermore, when shock-absorbing layers are used in an outdoor environment, coatings can degrade over time due to exposure to sunlight, rain, and wear, whereby chemical particles can end up in the soil or watercourses. A shock-absorbing layer according to the present claims offers an effective alternative for improving the shock absorption of a shock-absorbing layer, whereby a coating becomes superfluous, and even detrimental.

According to a preferred embodiment, the loops in the shock-absorbing layer are specifically oriented depending on the application of the shock-absorbing layer. The bending strength of the loops can be dependent on the bending direction. Hereby, a desired bending strength can be obtained with a certain orientation, which is tailored to the application of the shock-absorbing layer. In a further embodiment, the shock-absorbing layer comprises loops in at least two, and preferably three, different orientations, wherein the shock absorption is locally tailored to the application by local variation in the number of loops in the first, second, and third orientation.

According to a preferred embodiment, the cross-section has at at least one point a radius of curvature of at most 8 mm, preferably at most 4 mm, more preferably at most 3 mm, still more preferably at most 2.5 mm, still more preferably at most 2.0 mm, still more preferably at most 1.5 mm, still more preferably at most 1.0 mm. In a possible embodiment, the radius of curvature at said at least one point is at least 0.01 mm, preferably at least 0.025 mm, more preferably at least 0.05 mm, still more preferably at least 0.10 mm, still more preferably at least 0.25 mm, still more preferably at least 0.50 mm.

Preferably, the cross-section has a section of at least 5% of the length of the cross-section, preferably at least 10%, more preferably at least 20%, even more preferably at least 40%, where the radius of curvature is at most 8 mm, preferably at most 4 mm, more preferably at most 3 mm, more preferably at most 2.0 mm, even more preferably at most 1.5 mm, even more preferably at most 1.0 mm.

Preferably, the cross-section has at at least one point a radius of curvature of substantially 0 mm, which indicates the presence of an abrupt angle, instead of a curve (such as for example in a T-shape).

According to a preferred embodiment, the segment has a minimum bounding rectangle (minimum bounding rectangle) with a length that relates to the width with a value of at most 10:1, preferably at most 8:1 and more preferably at most 5:1. Even more preferably, this is at most 4:1 or even 3:1 or 2:1 or 3:2 or lower, such as for example 1:1. In a possible embodiment, the minimum bounding rectangle is approximately square. The minimum bounding rectangle is the rectangle with the smallest surface area that completely encloses the cross-section. This provides an indication of the extent to which the cross-section extends along two mutually perpendicular axes, which is crucial for obtaining sufficient bending stiffness, given that the "rib" or "protrusion" with which the cross-section extends in the smallest dimension typically provides the firmness, and serves as a reinforcement that ensures the loop bends less easily over an axis along the longest dimension.

According to a further preferred embodiment, the minimum bounding rectangle has a shortest dimension of at least 0.1 mm, preferably at least 0.25 mm, more preferably 0.5 mm, even more preferably at least 0.75 mm, and even more preferably at least 1.0 mm. This provides sufficient reinforcement to obtain a desired minimum bending stiffness.

According to an alternative further preferred embodiment, the minimum bounding rectangle has a longest dimension of at least 0.1 mm, preferably at least 0.25 mm, more preferably 0.5 mm, even more preferably at least 0.75mm, and even more preferably at least 1.0 mm. This provides sufficient reinforcement to obtain a desired minimum bending stiffness.

According to an alternative further preferred embodiment, the minimum bounding rectangle has a longest and shortest dimension of at least 0.1 mm, preferably at least 0.25 mm, more preferably 0.5 mm, even more preferably at least 0.75mm, and even more preferably at least 1.0 mm. This provides sufficient reinforcement to obtain a desired minimum bending stiffness.

According to a preferred embodiment, the cross-section comprises a segment with an average thickness of at least 0.1 mm, and preferably at least 0.15 mm, and more preferably at least 0.2 mm, and more preferably at least 0.2 mm, and more preferably at least 0.3 mm, and more preferably at least 0.4 mm, over a length of at least 0.1 mm, and preferably at least 0.2 mm.

According to a preferred embodiment, the individual segments (sections between nodes) of the cross-section have a thickness (dimension of the cross-section perpendicular to the longitudinal direction) between 0.05 mm and 0.5 mm, preferably between 0.1 mm and 0.4 mm, more preferably between 0.15 mm and 0.3 mm, even more preferably between 0.175 mm and 0.25 mm.

According to a further preferred embodiment, the minimum bounding rectangle has a shortest dimension of at most 4 mm, preferably at most 3 mm, more preferably at most 2 mm, even more preferably at most 1.75 mm, and even more preferably at most 1.50 mm. This provides sufficient reinforcement to obtain a desired minimum bending stiffness, without using too much material.

Preferably, the loops are attached to the backing cloth according to a loop-pile principle, wherein the number of loops per unit area is at least 80,000 loops per m² and at most 200,000 loops per m². An important advantage of the shock-absorbing layer made with a loop-pile structure is that it offers a longer lifespan than, for example, a cut tufting, also known as cut-pile. This is because the loops in the loop-pile structure create a dense surface that is suitable for absorbing shocks. The tufted loops are also suitable for springing back after being compressed, making them good at absorbing shocks, which is less the case with traditional cut-pile mats. The loop-pile structure provides more cushioning and resilience, as the fiber loops can move and compress, better absorbing the impact. This is especially important in applications where shock absorption is crucial, such as in sports fields and playgrounds.

Also, the fibers that are provided as loop-pile are generally more durable than those of cut-pile because the fiber loops are not cut. This means that the fibers wear out less quickly and therefore last longer. In addition, loop-pile fibers are less susceptible to fluff formation, so that the shock-absorbing layer retains its cushioning properties better.

Furthermore, a loop-pile shock-absorbing layer offers better drainage and ventilation than a cut-pile layer, because there is more space between the fiber loops to allow water and air to flow through. This can extend the life of the shock-absorbing layer and improve the safety of users by preventing water from accumulating and causing slipperiness.

According to a preferred embodiment, the fibers comprise an elastic polymer, which provides a higher elasticity and resilience, which leads to improved shock absorption and energy restitution properties. Preferably a resilient polymer such as, for example, a thermoplastic polymer. A resilient polymer is understood to mean a material that in particular has resilient properties and can therefore return to its original shape or position after being compressed. Such polymers can be made from polyvinyl chloride (PVC), polyethylene (PE), polypropylene (PP), polyamide (PA), ethylene propylene diene monomer (EPDM) or any other suitable polymer.

According to a further and/or alternative embodiment, the elastic polymer comprises a recycled elastic polymer.

According to an embodiment, the plurality of loops comprise at least 90 wt.% of an elastic polymer chosen from: PE, PP, PVC, PA, EPDM rubber, elastane, isoprene rubber, neoprene, isoprene butyl rubber, polyurethane, natural rubber, siloxanes and hypalon. Preferably, the loops mainly comprise PE or PP.

According to an embodiment, the loops are provided in rows, wherein a distance between the rows of loops is at least 0.05 mm, preferably at least 0.1 mm, preferably at least 0.2 mm, preferably at least 0.3 mm, preferably at least 0.4 mm, preferably at least 0.5 mm, preferably at least 1.0 mm, preferably at least 1.5 mm, preferably at least 2 mm, such as for example 2.5 mm.

Preferably, the distance between the rows is at most 10 mm, preferably at most 9.0 mm, preferably at most 8.0 mm, preferably at most 7.0 mm, preferably at most 6.0 mm, preferably at most 5.0 mm, preferably at most 4.0 mm, preferably at most 3.5 mm, preferably at most 3.0 mm, such as for example 2.5 mm.

Preferably, the distance is between the above-mentioned lower and upper limits. This distance is extremely suitable for obtaining a dense surface, suitable for absorbing shocks.

According to an embodiment, the fibers have a linear mass of at least 250 dtex and at most 8000 dtex, preferably between 1500 dtex and 6000 dtex, more preferably between 3000 dtex and 5000 dtex, such as for example about 4000 dtex. The linear mass of the fibers is directly related to their strength. By requiring an optimum minimum linear mass, the invention ensures that the fibers are strong enough to withstand the load they must bear in absorbing shocks. On the other hand, the linear mass should not be too high, as this can limit the flexibility of the fibers and reduce the shock-absorbing properties. By giving preference to fibers with a said linear mass, the optimum balance between strength and flexibility can be achieved. As a result, the shock-absorbing layer will have the required strength to absorb shocks, while at the same time retaining the flexibility of the fibers to ensure maximum shock absorption.

According to an embodiment, per 10 cm of the backing cloth, the fiber is passed through the backing cloth at least 30 times and at most 90 times, preferably at least 35 times and at most 75 times, preferably at least 40 times and at most 60 times. The length of 10 cm is taken along the direction of the rows of loops. Having a certain number of loops per unit of area and per length of the backing cloth is essential for achieving a good shock-absorbing effect. This creates a sufficient amount of loops to achieve good shock absorption. A higher number of loops per unit of area and per length of the backing cloth results in better shock absorption and increased stability of the surface. In addition, the number of loops increases the durability and life of the shock-absorbing layer. So it is important to have an appropriate number of loops to achieve good performance.

According to an embodiment, the loops have a pile height of at least 4 mm and at most 12 mm, preferably at least 6 mm and at most 10 mm. The pile height is determined by the distance from the backing cloth to the point on the loop furthest from the backing cloth. The pile height of the loops affects the shock-absorbing properties of the material. A higher pile height does not necessarily mean better shock absorption properties. This optimum pile height is suitable for damping shocks. This is because the loops at this pile height have sufficient freedom of movement to absorb and dampen shocks, but also remain close enough to the backing cloth to provide stability. A pile height that is too high can lead to reduced stability and a pile height that is too low can limit the shock absorption properties. The pile height must therefore be carefully selected based on the intended application and the required shock absorption properties.

According to an embodiment, the shock-absorbing layer is provided with a coating, applied to the backing cloth, suitable for fixing the loops. Preferably, the coating is applied to the top surface of the backing cloth. The use of a coating on the shock-absorbing layer can offer several advantages. Firstly, the coating can ensure better adhesion of the loops to the backing cloth, making the shock-absorbing layer more durable and less likely to wear out. In addition, the coating can help keep the loops in place and prevent them from shifting or coming loose. This can result in a more uniform and reliable shock-absorbing layer. Finally, the coating can also help to improve the shock-absorbing layer's resistance to moisture and other external influences.

According to an embodiment, the coating comprises polyethylene, polypropylene, or a combination of both. Preferably, the primary coating consists of at least 50 wt.% of polyethylene and/or polypropylene, preferably 70 wt.%, more preferably 90 wt.% and most preferably 99 wt.% of polyethylene and/or polypropylene. Polyethylene and polypropylene are both thermoplastic polymers widely used for their properties such as flexibility, durability, lightness and chemical resistance. These properties make them suitable for various applications, including the coating of the shock-absorbing layer. Polyethylene and polypropylene are also relatively inexpensive compared to other polymers, making the use of these materials as a coating for the shock-absorbing layer cost-effective. In addition, these materials are not harmful to the environment and can be recycled. Opting for a combination of the two materials optionally offers the possibility of combining the properties of both polymers to create an optimal coating with a balanced combination of strength, flexibility and adhesion.

Preferably, no coating is used. The tufting of the fibers namely creates a firm connection between the fibers and the backing cloth, making the shock-absorbing layer durable and resistant to wear and deformation. This can possibly lead to material savings because no additional coating is required.

According to an embodiment, the backing cloth is substantially manufactured from polyethylene, polypropylene or a combination of both. Preferably, the backing cloth consists of at least 50 wt.% of polyethylene and/or polypropylene, preferably 70 wt.%, more preferably 90 wt.% and most preferably 99 wt.% of polyethylene and/or polypropylene. In a particularly preferred embodiment, the backing cloth comprises a woven polypropylene layer. The use of polyethylene, polypropylene or a combination of both as the main material for the backing cloth has several advantages. These materials are lightweight, making the backing cloth easy to handle and install. In addition, they are durable and resistant to wear and deformation, so that the backing cloth has a long life and is suitable for intensive use. The woven polypropylene layer in the particularly preferred embodiment provides extra strength and stability to the backing cloth, which is essential for tufting the fibers. The backing cloth serves as a backing for the tufting, so it must be strong enough to hold the fibers in place and prevent them from shifting or coming loose.

Such embodiments have the surprising advantage that the shock-absorbing layer is recyclable, preferably even fully recyclable. In particular because both the backing cloth and the coating of the shock-absorbing layer are substantially manufactured from polyethylene and/or polypropylene.

According to an embodiment, the backing cloth has a weight of at least 150 g/m², preferably at least 160 g/m², preferably at least 170 g/m², preferably at least 180 g/m², preferably at least 190 g/m², preferably at least 200 g/m², preferably at least 210 g/m², preferably at least 220 g/m², preferably at least 230 g/m², preferably at least 240 g/m², and at most 350 g/m², preferably at most 340 g/m², preferably at most 330 g/m², preferably at most 320 g/m², preferably at most 310 g/m², preferably at most 300 g/m², preferably at most 290 g/m², preferably at most 280 g/m², preferably at most 270 g/m², preferably at most 260 g/m². An important advantage of a backing cloth with the said weight is that the cloth is sturdy and durable. It can absorb the shocks that occur when using the shock-absorbing layer and can support the weight of the material used. In addition, a heavier backing cloth provides better protection against root penetration and wear, thus extending the life of the shock-absorbing material. However, a lighter backing cloth can also have advantages, such as lower costs and better water permeability. The weight of the backing cloth therefore depends on the application and the desired properties.

According to an embodiment, the shock-absorbing layer has a pile weight of at most 5.0 kg/m², preferably at most 4.0 kg/m², preferably at most 3.0 kg/m², preferably at most 2.5 kg/m², preferably at most 2.0 kg/m², preferably at most 1.5 kg/m², preferably at most 1.0 kg/m². The pile weight is the weight of the fibers per square meter. It indicates how tightly the fibers are tufted together. A higher pile weight means that more fibers are used per square meter, which can provide more shock absorption and comfort. However, it is also important to look at the composition and density of the fibers, as these also influence the shock-absorbing properties. Said pile weight has the effect that the shock-absorbing layer is light and easy to handle. This makes it easier to install and move the shock-absorbing layer if necessary.

According to an embodiment, the shock-absorbing layer has a thickness of at least 0.1 mm, preferably at least 0.5 mm, preferably at least 1 mm, preferably at least 2 mm, and at most 100 mm, preferably at most 75 mm, preferably at most 50 mm. This thickness offers a higher degree of protection against bumps and falls, which increases the safety of users. Said thickness of the layer is also optimal for use in various applications.

According to a preferred embodiment of the first aspect of the invention, the shock-absorbing layer also comprises a plurality of perforations. Such an embodiment has the advantage that the ability to discharge liquids, such as water, is greatly increased.

According to a preferred embodiment, the shock-absorbing layer has a shock absorption, measured according to EN 14808, of at least 15% and preferably at least 30%. Because the shock-absorbing layer has a shock absorption of at least 15%, this shock-absorbing layer is very suitable for improving the shock absorption and energy restitution properties of the artificial turf installation.

According to a preferred embodiment, the shock-absorbing layer has a tensile strength, measured in accordance with EN 12230, of at least 0.10 MPa and preferably at least 0.15 MPa. Because the shock-absorbing layer has a tensile strength of at least 0.10 MPa, the layer is sufficiently strong to absorb the forces developed by users of the artificial turf installation.

According to a preferred embodiment, the water permeability of the shock-absorbing layer, measured according to EN 12616, is at least 180 mm/h.

In a second aspect, the invention relates to a method for manufacturing a shock-absorbing layer, comprising providing a backing cloth, and applying fibers according to the claims into the backing cloth by means of tufting on a tufting machine.

In a preferred embodiment, the method comprises tufting the fibers to a pile height between at least 4 mm and at most 12 mm, wherein the fibers are tufted into loops in a loop-pile fashion, wherein the number of loops per unit area is at least 100,000 loops per m² and at most 140,000 loops per m².

According to an embodiment, the loops have a circular cross-section, preferably with a diameter of 0.2-30 mm, preferably between 0.25 mm and 10 mm, more preferably between 0.5 mm and 2.0 mm, more preferably between 0.75 mm and 1.5 mm. According to an embodiment, the loops have a grass-shaped cross-section, preferably with a maximum thickness of 0.2-1 mm and a length of 0.5-3 mm. According to an embodiment, the loops have a donut-shaped cross-section, preferably the internal cavity has a diameter of 0.2-10 mm and the outer diameter of the cross-section of the loop is 1 to 3 times the diameter of this cavity. According to an embodiment, the loops have an eclipse-shaped cross-section, preferably with a maximum thickness of 0.2-1 mm and a length of 0.5-3 mm. According to an embodiment, the loops are arranged in parallel straight rows. According to an embodiment, the loops are arranged in parallel zigzag rows.

This method is advantageous because it produces a shock-absorbing layer that is both durable and effective in absorbing shock and vibration. By tufting the fibers in loops according to a loop-pile, a resilient layer is created that has excellent shock-absorption properties. In addition, the use of a backing cloth as a base for the fibers ensures that the layer remains firm and stable, which is important for maintaining the shock absorption properties in the long term. The method specifications, such as the pile height and the number of loops per unit of area, are also important because the shock absorption is optimized without compromising the durability of the layer.

A further advantage of this method is that it can be carried out easily by machine. Tufting machines suitable for this purpose are moreover already being used for the manufacture of, for example, an artificial turf installation and, consequently, they can also be used for the manufacture of a shock-absorbing layer according to the present invention without cumbersome adjustments.

It should also be noted that a loop-pile shock-absorbing layer is better than a cut-pile shock-absorbing layer for several reasons. First, a loop-pile structure provides more cushioning and resilience because the loops of the fibers can move and compress, better absorbing impacts. This is especially important in applications where shock absorption is crucial, such as in sports fields or playgrounds. Second, loop-pile fibers are generally more durable than cut-pile fibers because the loops are not cut. This means that the fibers wear out less quickly and therefore last longer. In addition, loop-pile fibers are less susceptible to fluff formation, so that the shock-absorbing layer retains its cushioning properties better. Finally, a loop-pile shock-absorbing layer offers better drainage and ventilation than a cut-pile layer, because there is more space between the loops for water and air to flow through. This can extend the life of the shock-absorbing layer and improve the safety of users by preventing water from accumulating and causing slipperiness.

According to an embodiment, the tufting machine uses a needle density of at least 0.1 cm and at most 0.6 cm, preferably at least 0.15 cm and at most 0.45 cm, more preferably at most 0.45 cm. A higher needle density means that the fibers are fixed more firmly in the backing cloth. As a result, the shock-absorbing layer stays in place better and retains its shape, even with intensive use. It also ensures that the fibers are better secured and that the loops become firmer. This not only improves the durability of the layer, but also provides better shock absorption. The fibers are more evenly distributed over the backing cloth. This creates a more uniform density of the fibers, which contributes to better shock absorption and stability. Furthermore, less material will be wasted because the fibers are better secured and fewer fibers are pulled out of the backing cloth during tufting.

According to an embodiment, a coating is applied to the backing cloth for fixing the loops. Applying a coating to the backing cloth before fixing the loops has various advantages for producing a shock-absorbing layer. First, the coating helps to better secure the loops of the fibers and protect the fibers from damage. This improves the durability of the shock-absorbing layer and makes it more resistant to intensive use and wear. Another advantage of using a coating is that it ensures better adhesion of the fibers to the backing cloth. This results in a more uniform and consistent layer with better stability and shock absorption. In addition, the coating prevents the fibers from shifting or coming loose during tufting, resulting in better quality loops. Finally, the coating helps to reduce material waste and optimize the use of raw materials. It reduces the chance of fibers coming loose during the production process, resulting in less material loss and more efficient use of available raw materials.

In short, applying a coating to the backing cloth is an important step in the production of a shock-absorbing layer. It contributes to the durability and stability of the layer and improves the quality of the loops. In addition, it reduces material waste and optimizes the use of raw materials.

According to an embodiment, per 10 cm of the backing cloth, the fibers are passed through the backing cloth at least 30 times and at most 90 times, preferably at least 35 times and at most 75 times, preferably at least 40 times and at most 60 times. Having a certain number of loops per unit of area and per length of the backing cloth is essential for achieving a good shock-absorbing effect. This creates a sufficient amount of loops to achieve good shock absorption. A higher number of loops per unit of area and per length of the backing cloth results in better shock absorption and increased stability of the surface. In addition, the number of loops increases the durability and life of the shock-absorbing layer. So it is important to have an appropriate number of loops to achieve good performance.

According to a preferred embodiment, the loops are provided in rows, wherein the distance between the rows of loops is between at least 0.05 mm and at most 3.5 mm.

For example, but not being limited thereto, the invention relates to the shock-absorbing layer as described herein as a layer for use in an artificial turf installation, wherein the shock-absorbing layer is arranged between the surface and artificial turf installation. The shock-absorbing layer is preferably placed under the backing cloth of the artificial turf installation. As a result, the artificial turf installation will have shock-absorbing properties. This shock-absorbing layer reduces complaints for users of the surface. Alternative shock-absorbing agents, such as a filler made of elastic granules, have the disadvantage that they wear quickly and erode off the terrain. The shock-absorbing layer under the artificial turf installation has a long service life. Moreover, it do not affect playing characteristics such as the rolling of the ball or the elasticity of the tufts.

One skilled in the art will appreciate that a method according to the second aspect is preferably carried out for manufacturing a shock-absorbing layer according to the first aspect. Each feature described in this document, both above and below, can therefore relate to any of these two aspects of the present invention.

In what follows, the invention is described using non-limiting figures that illustrate the invention, and which are not intended to and should not be interpreted as limiting the scope of the invention.

### FIGURES

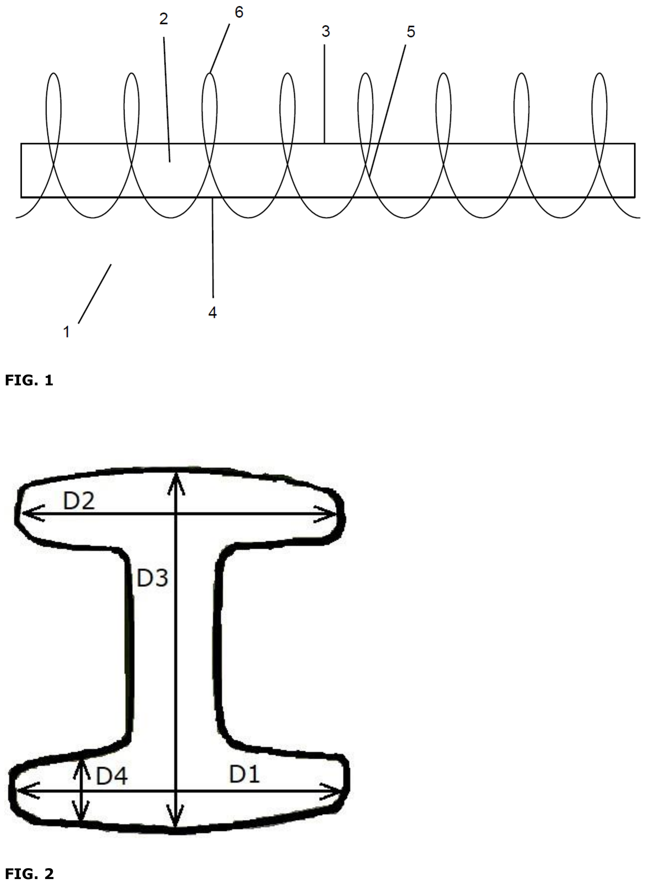

FIG. 1 shows a shock-absorbing layer 1, which is suitable, among other things, as an intermediate layer in an artificial turf installation, according to preferred embodiments of the invention. The shock-absorbing layer 1 contains a backing cloth 2 that is tufted by machine. At least one elastic polymer 5 is tufted through the backing cloth 2 according to a loop-pile technique. Hereby, loops are formed above the top surface 3 of the backing cloth. These loops are formed because the elastic polymer 5 is inserted through the backing cloth 2 via the bottom surface 4 of the backing cloth, whereby the polymer emerges again at the top surface 3 of the backing cloth. Subsequently, a loop 6 is formed and the elastic polymer is again inserted through the backing cloth 2 via the top surface 3, until it comes out again from the bottom surface 4. This process is repeated in a certain tufting direction, whereby a series of loops 6 is formed in the backing cloth 2. The elastic polymer, as soon as it emerges from the top surface 3, is looped against the tufting direction, as shown in FIG. 1.

Below is an overview of the meaning of the numbers used in the figures:
1 shock-absorbing layer
2 backing cloth
3 top surface backing cloth
4 bottom surface backing cloth
5 elastic polymer
6 loops

FIG. 2 shows a possible cross-section of the loops (i.e., of the fibers), in an I-shape. In this embodiment, the cross-section has a height (D3) of 1.108 mm, a width at the top side (D2) of 0.995 mm and a width at the bottom side (D1) of 1.023 mm, and a thickness (D4) of approximately 0.202 mm. It is self-evident that some variation is possible here, particularly in the thickness of the cross-section, given that the fibers are typically made via an industrial process.

The present invention should not be construed as being limited to the embodiments described above and certain modifications or changes may be added to the examples described without having to re-evaluate the appended claims.

## Claims

1. A shock-absorbing layer, preferably for an artificial turf installation, comprising a backing cloth with a top surface, a bottom surface, and a plurality of loops of fibers consisting of one or more elastic polymers, **characterized in that** the loops have a cross-section which comprises at least two free ends, and wherein the cross-section between said two ends consists of an elongated segment, wherein the elongated segment extends along a longitudinal axis, wherein the longitudinal axis comprises a first tangent vector at a first point and a second tangent vector at a second point, which first and second tangent vectors define a mutual angle between 20° and 160°, preferably between 30° and 150°.

2. A shock-absorbing layer according to claim 1, wherein the elongated segment, along its longitudinal axis, has a dimension perpendicular to the longitudinal axis which is at least 10%, preferably at least 25%, more preferably at least 35%, and even more preferably at least 50% of the dimension along the longitudinal direction

3. A shock-absorbing layer according to claim 1 or 2, wherein the one or more elongated segments form an angle between 20° and 160°, preferably between 30° and 150°, and/or wherein the tangent line to the one or more elongated segments at the first point is substantially perpendicular to the tangent line to the one or more elongated segments at the second point.

4. A shock-absorbing layer according to any one of the preceding claims 1 to 3, wherein the cross-section has or comprises one of the following shapes: C, E, F, H, J, K, L, M, N, S, T, V, W, X, Y, Z.

5. A shock-absorbing layer according to any one of the preceding claims 1 to 4, wherein the cross-section is I-shaped or H-shaped, preferably with a height and width having a mutual ratio between 1:2 and 2:1, preferably between 2:3 and 3:2.

6. A shock-absorbing layer according to any one of the preceding claims 1 to 5, wherein the loops are not coated.

7. A shock-absorbing layer according to any one of the preceding claims 1 to 6, wherein the segment at at least one point comprises a radius of curvature of at most 4 mm, preferably at most 1.0 mm.

8. A shock-absorbing layer according to the preceding claim 7, wherein the segment cross-section at at least one point comprises a radius of curvature of at least 0.05 mm, preferably at least 0.1 mm.

9. A shock-absorbing layer according to any one of the preceding claims 1 to 8, **characterized in that** the loops are arranged in rows, wherein a distance between the rows of loops is between at least 1.5 mm and at most 3.5 mm.

10. A shock-absorbing layer according to any one of the preceding claims 1 to 9, **characterized in that** the fibers have a linear mass of at least 250 dtex and at most 8000 dtex, preferably between 1500 dtex and 6000 dtex, more preferably between 3000 dtex and 5000 dtex.

11. A shock-absorbing layer according to any one of the preceding claims 1 to 10, **characterized in that** per 10 cm of the backing cloth, the fibers are passed through the backing cloth at least 30 times and at most 90 times.

12. A shock-absorbing layer according to any one of the preceding claims 1 to 11, **characterized in that** the loops have a pile height of at least 4 mm and at most 12 mm, preferably at least 6 mm and at most 10 mm.

13. A shock-absorbing layer according to any one of the preceding claims 1 to 12, wherein the segment has a minimum bounding rectangle with a length to width ratio of at most 10:1, preferably at most 8:1, and more preferably at most 5:1.

14. A shock-absorbing layer according to the preceding claim 13, wherein the minimum bounding rectangle has a shortest dimension of at least 0.1 mm, preferably at least 0.25 mm.

15. A shock-absorbing layer according to any one of the preceding claims 1 to 14, **characterized in that** the shock-absorbing layer has a pile weight of at most 2.5 kg/m².

16. A shock-absorbing layer according to any one of the preceding claims 1 to 15, **characterized in that** the shock-absorbing layer has a thickness of at least 0.1 mm and at most 100 mm.

17. A shock-absorbing layer according to any one of the preceding claims 1 to 16, **characterized in that** the loops are attached to the backing cloth according to a loop-pile principle, wherein the number of loops per unit area is at least 40,000, preferably at least 50,000, more preferably at least 60,000, loops per m² and at most 200,000, preferably at most 180,000, more preferably at most 160,000, loops per m².
